## Europäisches Patentamt
## European Patent Office
## Office européen des brevets

(19)

(11) Numéro de publication: **0 086 700**
**B1**

(12)

# FASCICULE DE BREVET EUROPEEN

(45) Date de publication du fascicule du brevet:
**06.11.85**

(51) Int. Cl.⁴: **A 22 C 21/00, B 65 G 17/20**

(21) Numéro de dépôt: **83400249.5**

(22) Date de dépôt: **04.02.83**

(54) **Installation pour la découpe de carcasses d'animaux et dispositif d'accrochage de telles carcasses.**

(30) Priorité: **11.02.82 FR 8202251**

(43) Date de publication de la demande:
**24.08.83 Bulletin 83/34**

(45) Mention de la délivrance du brevet:
**06.11.85 Bulletin 85/45**

(84) Etats contractants désignés:
**AT BE CH DE GB IT LI LU NL SE**

(56) Documents cités:
**CH - A - 470 301**
**FR - A - 1 169 124**
**US - A - 2 423 560**
**US - A - 2 557 707**
**US - A - 3 132 373**
**US - A - 3 263 270**
**US - A - 3 518 717**
**US - A - 3 643 293**

(73) Titulaire: **ETABLISSEMENTS BOURGOIN Société Anonyme, F-89770 Chailley (FR)**

(72) Inventeur: **Charlot, Alain, 2 rue Henri Croissant, F-29111 Scaer (FR)**
Inventeur: **Robichon, Michel, Cité de Kerfeiten, F-56560 Guiscriff (FR)**

(74) Mandataire: **Bonnetat, Christian et al, Cabinet PROPI Conseils 23 rue de Léningrad, F-75008 Paris (FR)**

ACTORUM AG

## Description

La présente invention conceren une installation pour la découpe de carcasses d'animaux et un dispositif d'accrochage de telles carcasses.

On connaît déjà, par exemple par les brevets US-A-2 557 707 et US-A-3 643 293, une installation qui permet de faire défiler en continu des carcasses d'animaux, notamment de volailles, devant des opérateurs, et dans laquelle lesdits carcasses sont suspendues à une chaîne sans fin ou analogue par l'intermédiaire de dispositifs d'accrochage, chacun de ces dispositifs d'accrochage étant constitué d'une tige supérieure reliée à la dite chaîne, d'une tige inférieure susceptible de porter une carcasse et d'un mécanisme d'articulation permettant un mouvement de rotation relatif de la tige inférieure autour de son axe par rapport à la tige supérieure, des doigts saillants étant prévus à la périphérie de la tige inférieure, et des moyens de butée et de guidage étant répartis le long du trajet desdits doigts pour coopérer avec ceux-ci et permettre de donner automatiquement et successivement aux carcasses une pluralité d'orientations fixes déterminées.

Dans ces installations connues, la position angulaire des carcasses est instable et n'est donc pas fixée en orientation. Il en résulte un manque de précision das le positionnement et la présentation des carcasses devant les opérateurs. De plus, la présentation des carcasses aux opérateurs ne peut être la meilleure aussi bien en ce qui concerne la facilité du travail que la qualité du prélèvement.

La présente invention a pour objet de remédier à ces inconvénients.

A cette fin, selon l'invention, l'installation du type mentionné ci-dessus est caractérisée en ce que sont prévus de plus des moyens d'articulation de la partie inférieure de la tige supérieure autour d'un axe orthogonal à ladite tige et des moyens de verrouillage desdits moyens d'articulation et en ce que des moyens de déverrouillage sont prévus le long du trajet desdits dispositifs d'accrochage pour déverrouiller les moyens de verrouillage, tandis que des rampes de guidage sont prévues pour plier et maintenir en position pliée la partie inférieure de la tige supérieure et la tige inférieure par rapport à la partie supérieure de la tige supérieure, la tige inférieure pouvent tourner sur elle-même dans ladite position pliée de la partie inférieure.

Ainsi, les carcasses peuvent être successivement présentées sous des angles différents aux différents opérateurs répartis le long de leur trajet, de sorte que ceux-ci sont à chaque fois dans la position optimale pour prélever le morceau de carcasse qu'ils doivent découper. Ce résultat provient principalement du fait que ladite tige inférieure peut tourner sur elle-même en position pliée de la partie inférieure de ladite tige supérieure.

De préférence, lesdites rampes de guidage forment des butées susceptibles de coopérer avec lesdits doigts, pour faire tourner la tige inférieure autour de son axe en position pliée du dispositif d'accrochage.

Avantageusement, chaque dispositif d'accrochage comporte deux jeux de doigts saillants et des jeux de moyens de butée et de guidage, disposés de façon que lorsqu'un dispositif d'accrochage est guidé par la coopération de l'un de ses jeux de doigts avec les moyens de guidage correspondants, l'autre jeu desdits doigts esten attente de coopérer avec les moyens de butée. Les deux jeux de doigts saillants sont de préférence agencés à des niveaux différents sur la tige inférieure. De plus, les deux jeux de doigts saillants peuvent former une croix et il est avantageux que les moyens de guidage soient constitués de rampes, tandis que les moyens de butée sont formés par les fronts avant desdites rampes, par rapport au sens de défilement des dispositifs d'accrochage.

La présente invention concerne également un dispositif d'accrochage pour une installation permettant de faire défiler en continu des carcasses d'animaux notamment de volailles, devant des opérateurs, ledit dispositif d'accrochage permettant de suspendre une carcasse à une chaîne sans fin ou analogue et comprenant une tige supérieure pour la liaison à ladite chaîne, une tige inférieure susceptible de porter une carcasse et un mécanisme d'articulation permettant un mouvement de rotation relatif de la tige inférieure autour de son axe par rapport à la tige supérieure, des doigts saillants étant prévus à la périphérie de la tige inférieure. Selon l'invention, un tel dispositif est caractérisé en ce que la partie inférieure de la tige supérieure est articulée par rapport à la partie supérieure de celle-ci, autour d'un axe othogonal à ladite tige, et en ce qu'un fourreau coulissant sur la tige est susceptible d'empêcher le jeu de l'articulation.

On remarquera que, pour d'autres fins, dans l'installation décrite dans le brevet US-A-3 643 293, on prévoit déjà des fourreaux coulissants sous l'action de rampes.

De préférence, le mécanisme d'articulation comporte un noyau traversé librement par l'un des tiges, et un manchon solidaire en rotation de l'autre tige et rendu solidaire en rotation dudit noyau. Les doigts peuvent être portés par le manchon, à des hauteurs différentes de celui-ci et le noyau et le manchon sont rendus solidaires l'un de l'autre par l'intermédiaire des doigts.

Les figures du dessin annexé feront bien comprendre comment l'invention peut être réalisée.

La figure 1 est une vue en perspective d'un dispositif d'accrochage pour volailles selon l'invention.
Les figures 2 et 3 sont deux vues agrandies en coupe longitudinale, à 90° l'une de l'autre, et selon les lignes II-II et III-III respectivement, du mécanisme d'articulation du dispositif de la figure 1.

La figure 4 illustre schématiquement un premier mode d'utilisation du dispositif d'accrochage selon l'invention dans une chaîne de découpe de volailles.

La figure 5 illustre schématiquement un second mode d'utilisation du dispositif d'accrochage selon l'invention dans une chaîne de découpe de volailles.

Les figures 6, 7 et 8 sont respectivement des vues selon les flèches VI-VI, VII-VII et VIII-VIII de la figure 5.

Sur ces figures, des références identiques indiquent des éléments semblables.

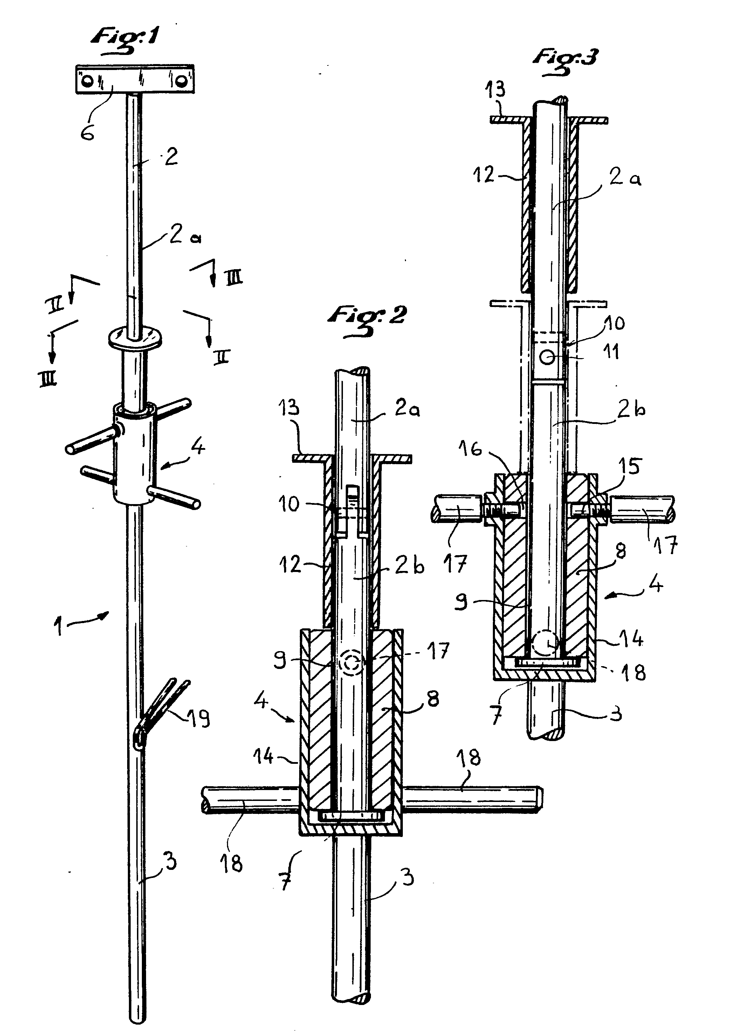

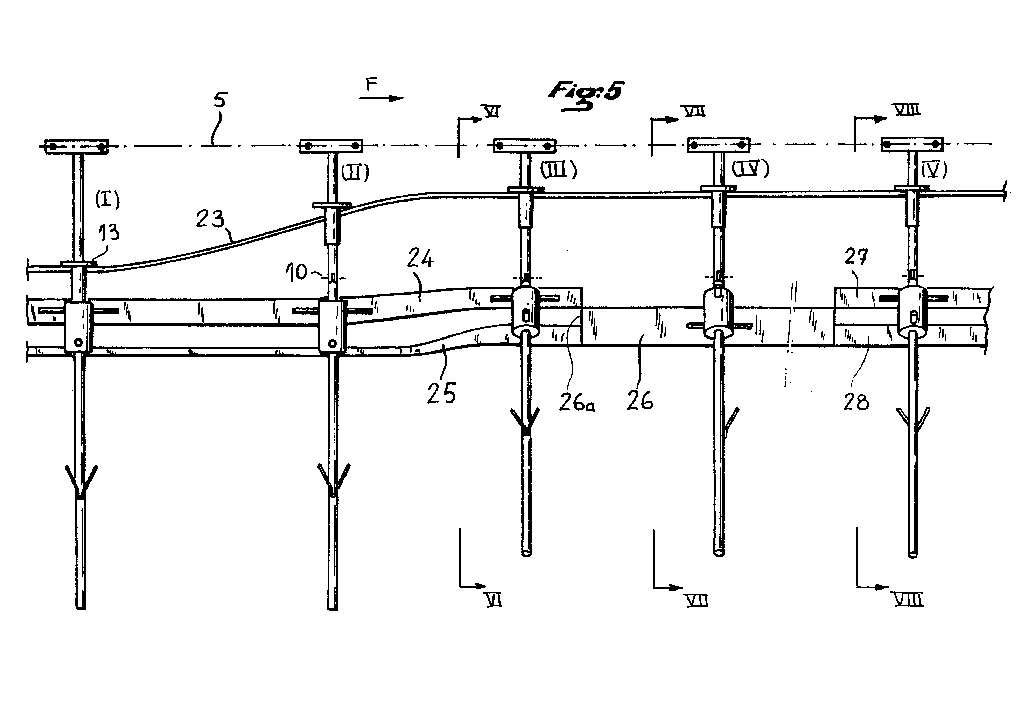

Le dispositif d'accrochage de volaille 1 selon l'invention, montré par la figure 1, comporte deux tiges 2 et 3 reliés l'une à l'autre par un système d'articulation 4. Le dispositif d'accrochage 1 est destiné à être suspendu à une chaîne de transport 5 (schématisée sur les figures 4 et 5), de façon que la tige 2 soit toujours au moins sensiblement verticale, alors que la tige 3 peut soit se trouver dans le prolongement de la tige 2 (figure 4), soit former un coude avec la tige 2 (figure 5).

En vue de sa suspension à la chaîne 5, le dispositif 1 comporte une plaque de fixation 6, solidaire de l'extrémité (supérieure) de la tige 2, opposée au système d'articulation 4.

L'extrémité (inférieure) de la tige 2 est munie d'une tête élargie 7 servant de butée d'arrêt à un noyau cylindrique 8, pourvu d'un alésage axial 9. Le diamètre de l'alésage axial 9 est suffisamment plus grand que le diamètre de la tige 2 pour que le noyau 8 puisse librement tourner autour de cette dernière. De plus, sur la partie inférieure de la tige 2, au-dessus du noyau 8, est prévue une articulation intermédiaire 10, d'axe 11 orthogonal à la tige 2. Ainsi, la tige 2 comporte une partie supérieure 2a s'étendant de la plaque 6 à l'articulation 10 et une partie inférieure 2b comprise entre l'articulation 10 et la tête 7. La longueur du noyau 8, parallèlement à la tige 2, est inférieure à la distance séparant la tête 7 de l'articulation 10, de sorte que, lorsque le noyau 8 est en appui sur la tête 7, ce noyau ne gêne pas le libre jeu de l'articulation 10.

En revanche, sur la tige 2, entre le noyau 8 et la plaque 6, est prévu un fourreau coulissant 12, dont la longueur est telle que, lorsqu'il repose sur le noyau 8, il s'étend de part et d'autre de l'articulation 10, de façon à inhiber celle-ci. A sa partie opposée au noyau 8, le manchon coulissant 12 est pourvu d'une bride 13.

A son extrémité dirigée vers la tige 2, la tige 3 est solidaire d'un manchon cylindrique coaxial 14, susceptible de servir de logement au noyau 8. Le manchon 14 est rendu solidaire en rotation du noyau 8 grâce à deux goujons filetés 15 diamétralement opposés, se vissant dans des trous filetés de la paroi de manchon 14 et pénétrant dans des trous 16 du noyau 8. Les goujons 15 et les trous 16 sont orthogonaux à la tige 2. De plus, ils sont prolongés vers l'extérieur par des doigts saillants 17 diamétralement opposés. Les doigts saillants 17 se trouvent du côté de la partie supérieure de l'enveloppe 14. Le bord supérieur du manche 14 se trouve de préférence approximativement au noyau de l'éxtrémité supérieure du noyau 8 et, dans tous les cas, doit se trouver à une distance suffisamment éloignée de l'articulation 10 pour ne pas gêner le fonctionnement de celle-ci.

Par ailleurs, le dispositif 1 comporte deux autres doigts 18 diamétralement opposés l'un à l'autre et rendus solidaires du manchon 14, en étant décalés en hauteur, c'est-à-dire parallèlement à la longueur de la tige 2 par rapport aux doigts 17. Les doigts 17 et 18 définissent deux lignes orthogonales entre elles et à la partie 2b de la tige 2.

Enfin, un crochet 19, par exemple double, est rendu solidaire de la partie intermédiaire de la tige 3.

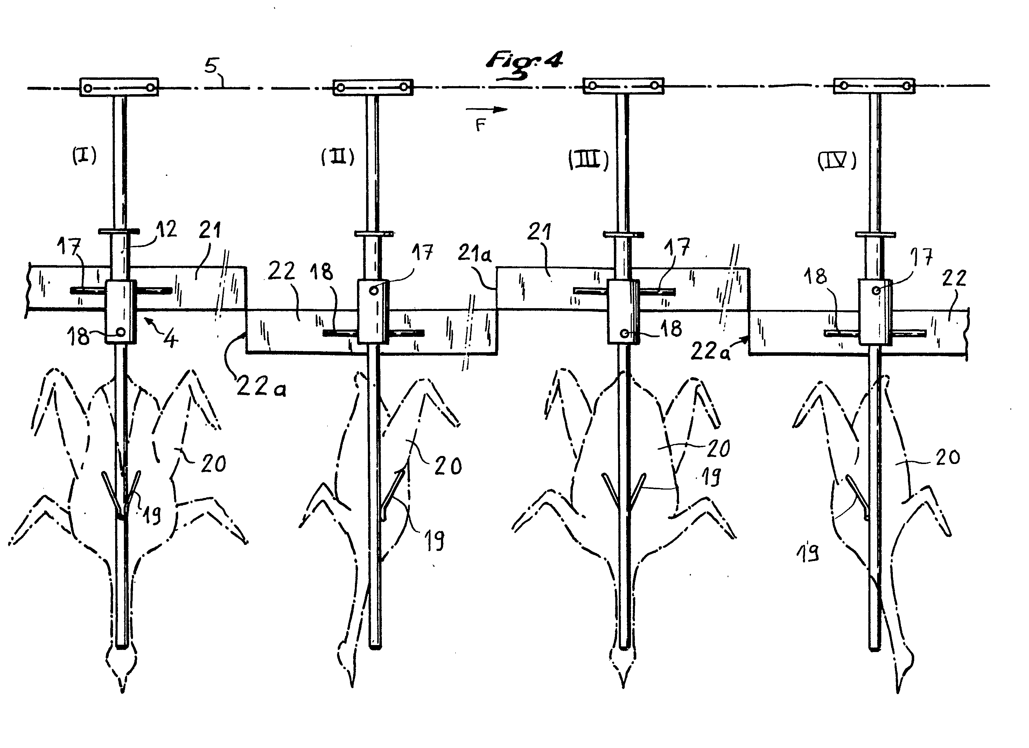

On voit ainsi que, grâce à sa structure, le dispositif 1 est tel que la tige 3 peut tourner autour de son propre axe, la tige 2 restant fixe. En effet, le noyau 8, dont la tige 3 est solidaire en rotation grâce aux goujons 15, sert de palier à la partie 2b de la tige 2. Cette rotation de la tige 3 par rapport à la tige 2 peut s'effectuer aussi bien lorsque l'articulation 10 est libre de jouer (voir sur la figure 3 la position relevée en traits pleins du fourreau 12) que lorsque cette articulation est bloquée (voir sur la figure 2, en traits pleins, et sur la figure 3, en traits mixtes, la position basse du fourreau 12).

Sur la figure 4, on a illustré schématiquement l'exploitation de cette possibilité de rotation de la tige 3 par rapport à la tige 2, lorsque l'articulation 10 est bloquée par le fourreau 12, pour la présentation, en vue de sa découpe par exemple, d'une volaille 20, empalée sur la tige 3 et retenue par le crochet 19, sous ses différents aspects.

Sur cette figure 4, il est supposé que les dispositifs 1 sont solidaires en translation d'une chaîne 5, qui les déplace de la gauche vers la droite de la figure, selon la flèche F. Au niveau du mécanisme d'articulation 4, sont prévues des surfaces d'appui, par exemple des bandes 21 ou 22, au moins sensiblement parallèles à la chaîne.

Les bandes 21 sont disposées au niveau des doigts 17, mais laissent dégagés les doigts 18. De même, les bandes 22 se trouvent au niveau des doigts 18 et non pas au niveau des doigts 17. Les bandes 21 et 22 sont disposées juste derrière le dispositif 1 de façon que leurs bords frontaux 21a et 22a puissent servir de butée respectivement aux doigts 17 et 18.

Dans la position (I) montrée sur la figure 4, le dispositif 1 est tel que les doigts 17 sont parallèles à la bande 21 correspondante, les doigts 18 étant orthogonaux à celle-ci. Dans cette position, le crochet 19 est disposé vers l'avant et la volaille 20 montre par exemple également son ventre vers l'avant. Au moins un premier opérateur donc découper certaines portions de la carcasse dirigée vers lui, alors que le dispositif 1 se déplace dans le sens de la flèche F.

Le manchon 14 est empêché de tourner par la coopération des doigts 17 et de la bande 21. Lorsque le dispositif 1 arrive à l'éxtremité de la bande 21, il rencontre simultanément le bord frontal 22a de la bande 22 suivante. Ce bord frontal 22a arrête le doigts 18 correspondant, de sorte que la tige 3 tourne d'un quart de tour autour de son axe grâce au mécanisme 4. Il en résulte que les doigts 18 deviennent parallèles à la bande 22, tandis que les doigts 17 deviennent orthogonaux à celle-ci pour prende la position (II) de la figure 4. La volaille 20 présente alors son flanc gauche et au moins un second opérateur peut donc prélever des morceaux de carcasses de ce flanc, pendant toute la longueur de la bande 22, celle-ci empêchant la rotation de la tige 3 grâce à la coopération avec les doigts 18.

Lorsque le dispositif 1 arrive à l'éxtremité de la bande 22, l'un de ses doigts 17 est arrêté par le bord frontal 21a de la bande 21 suivant et la tige 3 tourne d'un nouveau quart de tour (position III). La volaille 20 présente donc maintenant son dos à au moins un troisième opérateur pendant toute la longueur de cette bande 21.

L'avance du dispositif 1 se poursuivant, l'un des doigts 18 rencontre le bord frontal 22a de la bande 22 suivant la bande 21 précédente. Le dispositif 1 et la volaille 20 tournent de nouveau d'un quart de tour, de sorte que le volaille présente son flanc droit.

On voit ainsi que grâce la structure du dispositif d'accrochage 1 et à la disposition des bandes 21,22, il est possible de présenter successivement toutes les faces de la volaille 20 à des opérateurs disposés d'un même côté de la chaîne 5, ce qui faciliter leur travail.

Afin de faciliter encore plus ce travail, on peut de plus faire en sorte que les volailles soient inclinées par rapport à la verticale, au lieu de rester suspendues verdicalement.

La figure 5 représente un exemple de réalisation d'installation dans ce cas. On prévoit alors une rampe 23 qui, en prenant appui sous la bride 13 du fourreau 12, est susceptible de soulever celui-ci et de la maintenir en position levée, afin de deverrouiller l'articulation 10 [passage de la position (I) à la position (II) sur la figure 5].

De plus, l'installation comporte alors des rampes inclinées dans l'espace, évolutives et vrillées, permettant de faire tourner la tige 3 autour de l'axe 11 de l'articulation 10 et/ou la tige 3 autour de son axe, tout en maintenant la tige 3 dans une position inclinée par rapport à la verticale.

Par exemple, on prévoit une rampe 24 susceptible de prendre appui sur le manchon 14 au niveau des doigts 17 et une rampe 25 susceptible de prendre appui sous les doigts 18, pour amener le dispositif 1 de la position (II) à la position (III) (voir également la figure 6), les doigts 18 passant entre lesdites rampes.

Si, à partir de cette position coudée du dispositif 1, on veut faire tourner la tige 3 autour de son axe, il suffit de prévoir une rampe 26 qui prolonge les rampes 24 et 25 et, dont le bord frontal 26a est susceptible d'arrêter l'un des doigts 18, sans empêcher la rotation des doigts 17.

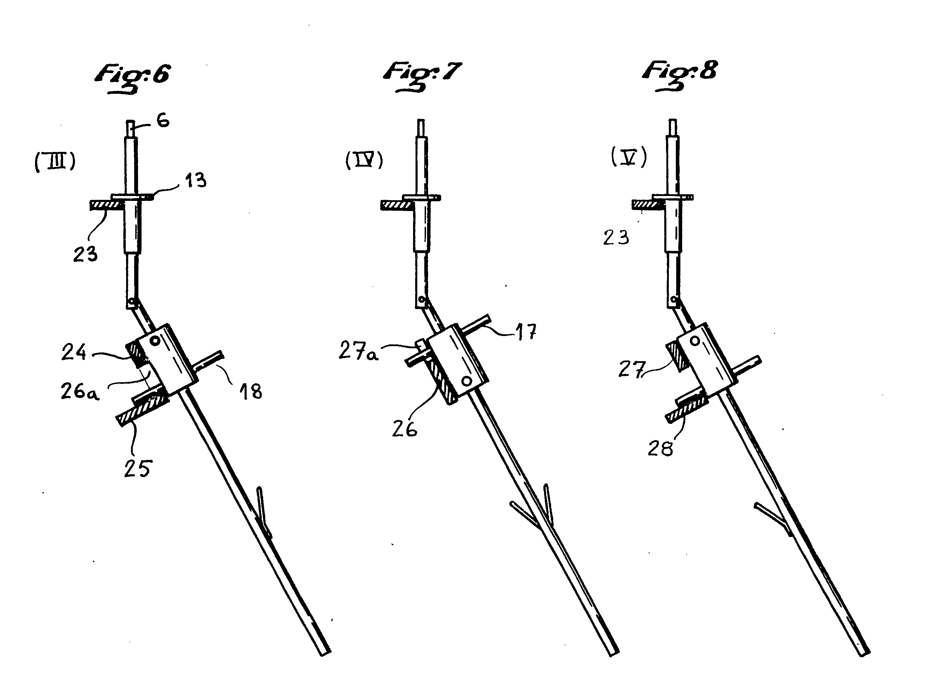

Le dispositif 1 prend alors la position (IV) (voir également la figure 7); on peut continuer la rotation pas-à-pas (par quart de tour) de la tige, selon le même principe, grâce à d'autres rampes 27, 28 [voir la position (V) et la figure 8].

## Revendications

1. Installation qui permet de faire défiler en continu des carcasses d'animaux, notamment de volailles (20), devant des opérateurs, et dans laquelle lesdites carcasses sont suspendues à une chaîne sans fin ou analogue (5) par l'intermédiaire de dispositifs d'accrochage (1), chacun de ces dispositifs d'accrochage étant constitué d'une tige supérieure (2) reliée à la dite chaîne, d'une tige inférieure (3) susceptible de porter une carcasse (20) et d'un mécanisme d'articulation (4) permettant un mouvement de rotation relativ de la tige inférieure (3) autour de son axe par rapport à la tige supérieure (2), des doigts saillants (17, 18) étant prévus à la périphérie de la tige inférieure (3), et des moyens de butée (21a, 22a) et de guidage (21, 22) étant répartis le long du trajet desdits doigts pour coopérer avec ceux-ci et permettre de donner automatiquement et successivement aux carcasses (20) une pluralité d'orientations fixes déterminées, caractérisée en ce que sont prévus de plus des moyens d'articulation (10) de la partie inférieure (2b) de la tige supérieure (2) autour d'un axe (11) orthogonal à ladite tige (2) et des moyens de verrouillage (12) desdits moyens d'articulation (10) et en ce que des moyens de déverrouillage (23) sont prévus le long du trajet desdits dispositifs d'accrochage pour déverrouiller les moyens (12), tandis que des rampes de guidage (24, 25, 26) sont prévues pour plier et maintenir en position pliée la partie inférieure (2b) de la tige supérieure (2) et la tige inférieure (3) par rapport à la partie supérieure (2a) de la tige supérieure (2), la tige inférieure (3) pouvant tourner sur elle-même dans ladite position pliée de la partie inférieure (2b).

2. Installation selon la revendication 1, caractérisée en ce que lesdites rampes de guidage (24, 25, 26) forment des butées (26a, 27a) susceptibles de coopérer avec lesdits doigts (17) et (18), pour faire tourner la tige inférieure (3) autour de son axe en position pliée du dispositif d'accrochage (1).

3. Installation selon l'une des revendications 1 ou 2, caractérisée en ce que chaque dispositif d'accrochage (1) comporte deux jeux (17) et (18) de doigts saillants et des jeux de moyens de butée (21a, 22a) et de guidage (21, 22), disposés de façon que lorsqu'un dispositif d'accrochage est guidé par la coopération de l'un de ses jeux de doigts (17) ou (18) avec les moyens de guidage (21) ou (22) correspondants, l'autre jeu desdits doigts (18) ou (17) est en attente de coopérer avec les moyens de butée (22a) ou (21a).

4. Installation selon l'une des revendications 1 à 3, caractérisée en ce que des jeux (17) et (18) de doigts saillants sont agencés à des niveaux différents sur la tige inférieure (3).

5. Installation selon l'une des revendications 1 à 4, caractérisée en ce qu'au moins deux jeux de doigts saillants (17, 18) forment une croix et en ce que les moyens de guidage (21,22) sont constitués de rampes, tandis que les moyens de butée (21a) et (22a) sont formés par les fronts avant desdites rampes, par rapport au sens de défilement des dispositifs d'accrochage (1).

6. Dispositif d'accrochage pour installation permettant de faire défiler en continu des carcasses d'animaux, notamment de volailles (20), devant des opérateurs, ledit dispositif d'accrochage permettant de suspendre une carcasse (20) à une chaîne sens fin (5), ou analogue, et comprenant une tige supérieure (2) pour la liaison à ladite chaîne (5), une tige inférieure (3) susceptible de porter une carcasse (20) et un mécanisme d'articulation (4) permettant un mouvement de rotation relatif de la tige inférieure (3) autour de son axe par rapport à la tige supérieure (2), des doigts saillants (17,18) étant prévus à la périphérie de la tige inférieure (3), caractérisé en ce que la partie inférieure (2b) de la tige supérieure (2) est articulée en (10) par rapport à la partie supérieure (2a) de celle-ci, autour d'un axe (11) orthogonal à ladite tige (2), et en ce qu'un fourreau (12) coulissant sur la tige (2) est susceptible d'empêcher le jeu de l'articulation (10).

7. Disspositif selon la revendication 6, caractérisé en ce que le mécanisme d'articulation (4) comporte un noyau (8) traversé librement par l'une (2) des tiges, et un manchon (14) solidaire en rotation de l'autre tige et rendu solidaire en rotation dudit noyau (8).

8. Dispositif selon l'une des revendications 6 ou 7, caractérisé en ce que les doigts (17 et 18) sont portés par le manchon (14), à des hauteurs différentes de celui-ci.

9. Dispositif selon l'une quelconque des revendications 7 et 8, caractérisé en ce que le noyau (8) et le manchon (14) sont rendus solidaires l'un de l'autre par l'intermédiaire des doigts (17).

## Patentansprüche

1. Anlage zum kontinuierlichen Vorbeiführen der Rümpfe von Tieren, insbesondere von Geflügel (20) an einer Bearbeitungsperson, und in der die Rümpfe an einer endlosen Kette oder dgl. (5) mittels Hakenvorrichtungen aufgehängt, von denen jede eine obere Stange (2), die mit der Kette verbunden ist, eine untere Stange (3) die zum Tragen des Rumpfes (20) geeignet ist, und einen Schwenkmechanismus (4) aufweist, durch die eine Drehbewegung gegenüber der unteren Stange (3) um ihre Achse gegenüber der oberen Stange (2) möglich ist, wobei vorstehende Finger (17, 18) auf der Peripherie der unteren Stange (3) sowie Anschlag- (21a, 22a) und Führungsmittel (21, 22) vorgesehen sind, die längs der Bahn der Finger verteilt angeordnet sind, um mit letzteren zusammenzuarbeiten und dadurch zu erreichen, dass den Tierrümpfen (20) aufeinanderfolgend selbsttätig mehrere ortsfeste und festgelegte Ausrichtungen gegeben werden, dadurch gekennzeichnet, dass zusätzliche Schwenkmittel (10) des unteren Teils (2b) der oberen Stange (2) um eine senkrecht zur Stange (2) stehenden Achse (11) sowie Verriegelungsmittel (12) für die Schwenkmittel (10) vorgesehen sind, und dass Entriegelungsmittel (23) längs der Bahn der Hakenvorrichtungen zum Entriegeln der Mittel (12) vorgesehen sind, während geneigte Führungsebenen (24, 25, 26) angeordnet sind, um den unteren Teil (2b) der oberen Stange (2) in geklappte Stellung sowie die untere Stange (3) gegenüber dem oberen Teil (2a) der oberen Stange (2) zu bringen und zu halten, wobei sich die untere Stange (3) in der geklappten Stellung des unteren Teils (2b) um sich selbst drehen kann.

2. Anlage nach Anspruch 1, dadurch gekennzeichnet, dass die geneigten Führungsebenen (24, 25, 26) Anschläge (26a, 27a) bilden, die mit den Fingern (17) und (18) zusammenarbeiten können, um die untere Stange (3) bei umgeklappter Stellung der Hakenvorrichtung (1) um ihre eigene Achse drehen zu lassen.

3. Anlage nach einem der Ansprüche 1 oder 2, dadurch gekennzeichnet, dass jede Hakenvorrichtung (1) zwei Sätze (17 und 18) hervorstehender Finger und Sätze von Anschlaggliedern (21a, 22a) sowie Führungen (21, 22) aufweist, die derart angeordnet sind, dass, wenn eine Hakenvorrichtung durch Mitwirkung einer der Fingersätze (17 oder 18) mit den entsprechenden Führungsmitteln (21 oder 22) geführt wird, ist der andere Satz der Finger (18 oder 17) in Wartestellung für die Zusammenarbeit mit den Anschlaggliedern (22a oder 21a).

4. Anlage nach einem der Ansprüche 1 bis 3, dadurch gekennzeichnet, dass die Sätze (17 und 18) der hervorstehenden Finger an unterschiedlichen Ebenen auf der unteren Stange (3) zum Einsatz kommen.

5. Anlage nach einem der Ansprüche 1 bis 4, dadurch gekennzeichnet, dass zumindest zwei Sätze hervorstehender Finger 17, 18) ein Kreuz bilden, und dass die Führungen (21, 22) geneigte Ebenen darstellen, während die Anschlagglieder (21a und 22a) aus den Vorderflächen der geneigten Ebenen gegenüber der Vorbeiführungsrichtung der Hakenvorrichtungen (1) gebildet sind.

6. Hakenvorrichtung für eine Anlage zum kontinuierlichen Vorbeiführen von Tierrümpfen, insbesondere von Geflügelrümpfen (20) an einer Bearbeitungsperson, wobei durch die Hakenvorrichtung ein Rumpf (20) an einer endlosen Kette (5) oder dgl. aufgehängt wird und diese Vorrichtung eine obere Stange (2) für die Verbindung mit der Kette (5), eine untere Stange (3), die zum Tragen des Rumpfes (20) dient, und einen Schwenkmechanismus (4) aufweist, durch die eine Drehbewegung gegenüber der unteren Stange (3) um ihre Achse gegenüber der oberen Stange (2) möglich ist, und wobei die hervortretenden Finger (17, 18) auf der Peripherie der unteren Stange (3) vorgesehen sind, dadurch gekennzeichnet, dass der untere Teil (2b) der unteren Stange (2) bei (10) gegenüber ihrem oberen Teil (2a) um eine senkrecht zur Stange (2) stehenden Achse (11) angelenkt ist, und dass eine Hülse (12), die auf der Stange gleitend verschiebbar ist, so ausgebildet ist, dass sie das Spiel der Anlenkung (10) verhindert.

7. Vorrichtung nach Anspruch 6, dadurch gekennzeichnet, dass der Schwenkmechanismus (4) einen Kern (8), der von einer (2) der Stangen frei durchquert wird, und eine Muffe (14) aufweist, die mit der anderen Stange drehbar verbunden ist und mit dem Kern (8) drehkraftgepaart wird.

8. Vorrichtung nach einem der Ansprüche 6 oder 7, dadurch gekennzeichnet, dass die Finger (17 und 18) von der Muffe (14) in unterschiedlicher Höhe getragen werden.

9. Vorrichtung nach einem der Ansprüche 7 und 8, dadurch gekennzeichnet, dass der Kern (8) und die Muffe (14) mit Hilfe der Finger (17) miteinander drehkraftgepaart werden.

## Claims

1. Installation which enables carcasses of animals, particularly of poultry (20), to advance continuously in front of operators, and in which said carcasses are suspended fom an endless chain of the like (5) via hooking devices (1), each of these hooking devices being constituted by an upper rod (2) connected to said chain, by a lower rod (3) capable of carrying a carcass (20) and by an articulation mechanism (4) allowing a relative movement of rotation of the lower rod (3) about its axis with respect to the upper rod (2), projecting fingers (17, 18) being provided on the periphery of the lower rod (3), and stop means (21a, 22a) and guiding means (21, 22) being distributed along the path of said fingers to cooperate therewith and to make it possible to give the carcasses (20), automatically and successively, a plurality of determined fixed orientations, characterized in that also provided are means (10) for articulation of the lower part (2b) of the upper rod (2) about a pin (11) at right angles to said rod (2) and means (12) for locking said articulation means (10) and in that unlocking means (23) are provided along the path of said hooking devices to unlock the means (12), whilst guide ramps (24, 25, 26) are provided to fold and maintain in folded position the lower part (2b) of the upper rod (2) and the lower rod (3) with respect to the upper part (2a) of the upper rod (2), the lower rod (3) being able to rotate on itself in said folded position of the lower part (2b).

2. Installation according to Claim 1, characterized in that said guide ramps (24, 25, 26) form stops (26a, 27a) capable of cooperating with said fingers (17) and (18), to rotate the lower rod (3) about its axis in folded position of the hooking device (1).

3. Installation according to one of Claims 1 or 2, characterized in that each hooking device (1) comprises two sets (17) and (18) of projecting fingers and sets of stop means (21a, 22a) and guiding means (21, 22), disposed so that, when a hooking device is guided by the cooperation of one of its sets of fingers (17) or (18) with the corresponding guide means (21) or (22), the other set if said fingers (18) or (17) is standing by to cooperate with the stop means (22a) or (21a).

4. Installation according to one of Claims 1 to 3, characterized in that sets (17) and (18) of projecting fingers are arranged at different levels of the lower rod (3).

5. Installation according to one of Claims 1 to 4, characterized in that at least two sets of projecting fingers (17, 18) form a cross and in that the guiding means (21, 22) are constituted by ramps, whilst the stop means (21a) and (22a) are formed by the front faces of said ramps, with respect to the direction of advance of the hooking devices (1).

6. Hooking device for installation enabling carcasses of animals, particularly of poultry (20), to advance continuously in front of operators, said hooking device making it possible to suspend a carcass (20) from an endless chain (5), or the like, and comprising an upper rod (2) for connection to said chain (5), a lower rod (3) capable of carrying a carcass (20) and an articulation mechanism (4) allowing a relative movement of rotation of the lower rod (3) about its axis with respect to the upper rod (2), projecting fingers (17, 18) being provided on the periphery of the lower rod (3), characterized in that the lower part (2b) of the upper rod (2) is articulated at (10) with respect to the upper part (2a) thereof, about a pin (11) at right angles to said rod (2), and in that a sleeve (12) sliding on the rod (2) is capable of preventing the clearance of the articulation (10).

7. Device according to Claim 6, characterized in that the articulation mechanism (4) comprises a core (8) traversed freely by one (2) of the rods, and a muff (14) fast in rotation with the other rod and rendered fast in rotation with said core (8).

8. Device according to one of Claims 6 or 7, characterized in that the fingers (17 and 18) are carried by the muff (14) at different heights thereon.

9. Device according to any one of Claims 7 and 8, characterized in that the core (8) and the muff (14) are rendered fast with each other via the fingers (17).

0 086 700

Fig:1

Fig:2

Fig:3

7

Fig. 4

0 086 700

*Fig:5*

0 086 700

*Fig:6*

(Ⅲ)

6

13

23

24

26a

25

18

*Fig:7*

(Ⅳ)

17

27a

26

*Fig:8*

(Ⅴ)

23

27

28

0 086 700